# EUROPÄISCHE PATENTSCHRIFT

(11) **EP 2 447 734 B1**
(45) Veröffentlichungstag und Bekanntmachung des Hinweises auf die Patenterteilung: **16.07.2014**
(21) Anmeldenummer: 11008681.6
(22) Anmeldetag: 29.10.2011
(51) Int. Cl.: B60W 50/00, G01S 15/93, G01S 13/93, G01S 17/93

(54) **Verfahren zum Gewinnen von Daten und zum Ausrichten eines Umfeldsensors eines Kraftwagens**
Method for generating data and aligning an environment sensor of a motor vehicle
Procédé destiné à la production de données et à l'alignement d'un capteur d'environnement d'un véhicule automobile

(30) Priorität: 02.11.2010 DE 102010050279
(43) Veröffentlichungstag der Anmeldung: 02.05.2012
(73) Patentinhaber: Audi AG, 85045 Ingolstadt (DE)
(72) Erfinder: Puder, Umberto, 85139 Wettstetten (DE)
(74) Vertreter: Patzelt, Heike Anna Maria

(56) Entgegenhaltungen:
- WO-A1-2005/071434
- DE-A1- 10 354 985
- DE-C1- 19 857 871

## Beschreibung

Die Erfindung betrifft ein Verfahren zum Gewinnen von Daten betreffend die Beurteilung der Notwendigkeit einer Neuausrichtung eines Umfeldsensors eines Kraftwagens sowie ein Verfahren zum Ausrichten eines Umfeldsensors eines Kraftwagens.

In Kraftwägen finden zunehmend Fahrerassistenzsysteme Einsatz, welche Regelvorgänge ausführen, für die z. B. Informationen über die Position und Bewegung vorausfahrender Fahrzeuge, Fahrspurverläufe etc. herangezogen werden. Diese Informationen werden durch geeignete Umfeldsensoren bereitgestellt, welche dann optimal eingestellt sind, wenn ihre Erfassungs- bzw. Wirkungsrichtung mit der geometrischen Fahrachse des Fahrzeugs zusammenfällt. Aufgrund toleranzbedingter Montagen und Lageänderungen im Fahrbetrieb wird die tatsächliche Einstellung in der Regel von der optimalen Einstellung abweichen.

Im Rahmen von Wartungs- und Reparaturarbeiten am Fahrzeug kann es zu Änderungen an der Achsgeometrie kommen. Beispielsweise wird bei Änderung der Spurwerte der Räder der Hinterachse auch die geometrische Fahrachse verändert. In diesen Fällen wird das Servicepersonal generell angewiesen, die Umfeldsensoren neu zu justieren.

Die hierbei durchgeführte Sensorjustage ist jedoch mehrheitlich nicht erforderlich. Durch Änderungen der Lage der geometrischen Fahrachse werden in der Mehrzahl der Fälle die Toleranzgrenzen für den vorgegebenen zulässigen Sollbereich der Sensorjustage nicht überschritten. In einigen Fällen wird durch die Änderung der geometrischen Fahrachse sogar eine Reduzierung des Dejustagewinkels des Sensors erreicht.

Aus der DE 198 57 871 C1 ist eine Vorrichtung zum Justieren eines Abstandsradarsensors an einem Kraftfahrzeug bekannt. Bei der Justage, welche unter Zuhilfenahme eines Laserstrahls erfolgt, wird auch die geometrische Fahrachse berücksichtigt. Diese wird durch Winkelsensoren an den Hinterrädern ermittelt. Hierdurch kann die Position des Radarsensors auf die Lage der geometrischen Fahrachse abgestimmt werden.

Weitere Vorrichtungen zum Justieren eines Abstandsradarsensors an einem Kraftfahrzeug sind aus der WO2005/071434 A1 und DE 103 54 985 A1 bekannt.

Es ist Aufgabe der Erfindung, die Ausrichtung eines Umfeldsensors zu vereinfachen und überflüssige Justagearbeiten zu vermeiden.

Diese Aufgabe wird durch ein Verfahren, welches die Merkmale des Patentanspruchs 1 aufweist, sowie ein Verfahren mit den Merkmalen des Patentanspruchs 11 gelöst.

Das erfindungsgemäße Verfahren dient zum Gewinnen von Daten, auf Basis derer eine Beurteilung erfolgen kann, ob eine Notwendigkeit dazu besteht, einen Umfeldsensor eines Kraftwagens neu auszurichten. Es umfasst folgende Schritte:
a) Ermitteln eines Erfassungsrichtungsabweichungswertes für die Abweichung einer Haupterfassungsrichtung des Umfeldssensors von einer Soll-Haupterfassungsrichtung des Umfeldsensors in einem Zustand des Kraftwagens, in dem sich die geometrische Fahrachse des Kraftwagens in einer ersten Lage befindet. Insbesondere kann die Soll-Haupterfassungsrichtung mit der ersten Lage der geometrischen Fahrachse zusammenfallen.
b) Bestimmen der ersten Lage der geometrischen Fahrachse.
c) Verbringen der geometrischen Fahrachse in eine zweite Lage.
d) Bestimmen der zweiten Lage der geometrischen Fahrachse.
e) Ermitteln eines Fahrachsenabweichungswertes für die Abweichung der zweiten Lage der geometrischen Fahrachse von der ersten Lage der geometrischen Fahrachse.
f) auf Grundlage des Erfassungsrichtungsabweichungswertes und des Fahrachsenabweichungswertes Beurteilen, ob eine Notwendigkeit besteht, die Ausrichtung der Haupterfassungsrichtung des Umfeldsensors zu ändern.
g) Bereitstellen von Daten betreffend die Beurteilung aus Schritt f).
Die Reihenfolge der einzelnen Schritte ist nicht zwingend festgelegt.

Um die Funktionsfähigkeit des Umfeldsensors zu garantieren, muss dessen Neuausrichtung nicht generell dann stattfinden, wenn sich die Lage der geometrischen Fahrachse ändert. Durch das Verfahren wird ein Entscheidungskriterium dafür bereitgestellt, wann eine Neuausrichtung des Umfeldsensors tatsächlich erforderlich ist. Nicht notwendige Neujustagen des Umfeldsensors können zuverlässig vermieden werden.

Vorzugsweise wird in Schritt f) aus dem Erfassungsrichtungsabweichungswert und dem Fahrachsenabweichungswert ein Ausrichtungsabweichungswert für die Abweichung der Haupterfassungsrichtung des Umfeldsensors von der zweiten Lage der geometrischen Fahrachse ermittelt. Auf diese Art lässt sich bedarfsgerecht beurteilen, ob eine Neujustage des Umfeldsensors erforderlich ist. Abweichungen zwischen der Haupterfassungsrichtung und der momentanen geometrischen Fahrachse müssen nicht direkt gemessen werden. Es werden zeit- und kostenintensive Verfahrensschritte vermieden, ohne Einbußen bei der Beurteilungsqualität hinnehmen zu müssen.

Vorzugsweise wird hierbei der Ausrichtungsabweichungswert mit einem vorgebbaren Schwellwert verglichen. Für den Fall, dass der Ausrichtungsabweichungswert kleiner oder gleich dem Schwellwert ist, erfolgt die Beurteilung, dass keine Notwenigkeit zum Ändern der Ausrichtung der Haupterfassungsrichtung des Umfeldsensors besteht. Für den Fall, dass der Ausrichtungsabweichungswert größer als der Schwellwert ist, erfolgt die Beurteilung, dass eine Notwendigkeit zum Ändern der Ausrichtung der Haupterfassungsrichtung des Umfeldsensors besteht. Der Schwellwert gibt insbesondere eine obere Grenze für den Ausrichtungsabweichungswert an, die nicht überschritten werden sollte. Das Schwellwertkriterium erlaubt eine einfache und zuverlässige Beurteilung, ob eine Änderung der Lage der geometrischen Fahrachse eine Änderung der Ausrichtung des Umfeldsensors erforderlich macht.

Vorzugsweise handelt es sich bei dem Erfassungsrichtungsabweichungswert und/oder dem Fahrachsenabweichungswert und/oder dem Ausrichtungsabweichungswert um einen Winkelwert. Der Winkel zwischen zwei Achsen ist eine zuverlässige und einfach zu bestimmende Messgröße.

Vorzugsweise erfolgt in Schritt a) das Ermitteln des Erfassungsrichtungsabweichungswertes unter Zuhilfenahme von statistischen Methoden. Der Umfeldsensor kann z. B. die Messwerte zu detektierten Objekten statistisch bewerten und so den Erfassungsrichtungsabweichungswert exakt berechnen. Fehler in der Richtungsbestimmung von Objekten können zuverlässig kompensiert werden.

Vorzugsweise erfolgt in Schritt c) das Verbringen der geometrischen Fahrachse des Kraftwagens in die zweite Lage durch ein Einstellen eines Spurwinkels zumindest eines Hinterrades des Kraftwagens. Die geometrische Fahrachse kann so besonders einfach eingestellt bzw. nachjustiert werden.

Vorzugsweise erfolgt in Schritt b) und/oder in Schritt d) das Bestimmen der ersten Lage und/oder der zweiten Lage der geometrischen Fahrachse automatisch mittels einer Achsenlagemesseinrichtung. Die automatische Bestimmung erlaubt eine schnelle und effiziente Ausführung des Verfahrens und liefert exakte sowie leicht reproduzierbare Ergebnisse. Mit der Achsenlagemesseinrichtung können z. B. auch sehr geringe Winkelwerte mit hoher Genauigkeit ermittelt werden.

Vorzugsweise laufen die Schritte a) und/oder b) und/oder d) und/oder e) und/oder f) in einer Recheneinheit ab, welche sich insbesondere im Kraftwagen befindet. Es können jedoch auch für einzelne oder mehrere der Schritte unterschiedliche Recheneinheiten zur Verfügung stehen, die Teil des Kraftwagens oder als externe Geräte bereitgestellt sein können. Auf diese Art lässt sich das Verfahren nahezu vollautomatisch, besonders präzise sowie schnell durchführen und führt zu sehr aussagekräftigen Beurteilungen.

Vorzugsweise werden in Schritt g) die Daten so für eine Bedienperson bereitgestellt, dass sie aus ihnen eine Handlungsanweisung dafür ableiten kann, ob eine Neuausrichtung des Umfeldsensors erfolgen soll. Je nach erfolgter Beurteilung in Schritt f) kann also die Bedienperson entweder angewiesen werden, eine Neuausrichtung des Umfeldsensors vorzunehmen oder diese zu unterlassen. Fehlerträchtige subjektive Entscheidungen durch Bedienpersonen werden durch objektive Beurteilungsmaßstäbe vermieden.

Vorzugsweise ist der Umfeldsensor als Radarsensor und/oder Ultraschallsensor und/oder Kamerasystem ausgebildet. Die Haupterfassungsrichtung eines Radar- bzw. Ultraschallsensors fällt dann insbesondere mit der jeweiligen Hauptabstrahlrichtung für Radarstrahlung bzw. Ultraschall zusammen.

Unter der geometrischen Fahrachse ist insbesondere die Winkelhalbierende des Gesamtvorspurwinkels der Räder der Hinterachse des Kraftwagens zu verstehen. Die geometrische Fahrachse schließt dann mit der fahrzeugspezifischen Fahrzeuglängsmittelebene den sogenannten Fahrachswinkel ein. Das erfindungsgemäße Verfahren zum Ausrichten eines Umfeldsensors eines Kraftwagens umfasst die Verfahrensschritte des Verfahrens zum Gewinnen von Daten gemäß Patentanspruch 1. Darüber hinaus erfolgt oder unterbleibt eine Neuausrichtung des Umfeldsensors in Abhängigkeit von dem Ergebnis der Beurteilung in Schritt f). Im Falle, dass in Schritt f) eine Beurteilung dahingehend erfolgt, dass eine Notwendigkeit zum Ändern der Ausrichtung der Haupterfassungsrichtung des Umfeldsensors besteht, wird die Haupterfassungsrichtung des Umfeldsensors in Richtung zur geometrischen Fahrachse hin ausgerichtet. Im Falle, dass in Schritt f) eine Beurteilung dahingehend erfolgt, dass keine Notwendigkeit zum Ändern der Ausrichtung der Haupterfassungsrichtung des Umfeldsensors besteht, wird die Ausrichtung des Umfeldsensors unverändert beibehalten. In den Fällen, in denen eine Neujustage des Umfeldsensors überflüssig wäre, unterbleibt diese. Die Wartung eines Kraftwagens kann so schneller und kostengünstiger erfolgen.

Anhand von Ausführungsbeispielen wird die Erfindung im Folgenden näher erläutert. Es zeigen:
- Fig. 1: eine schematische Draufsicht auf einen Kraftwagen mit einem Umfeldsensor; und
- Fig. 2: die relativen Lagen einer Haupterfassungsrichtung eines Umfeldsensors und einer geometrischen Fahrachse zueinander.

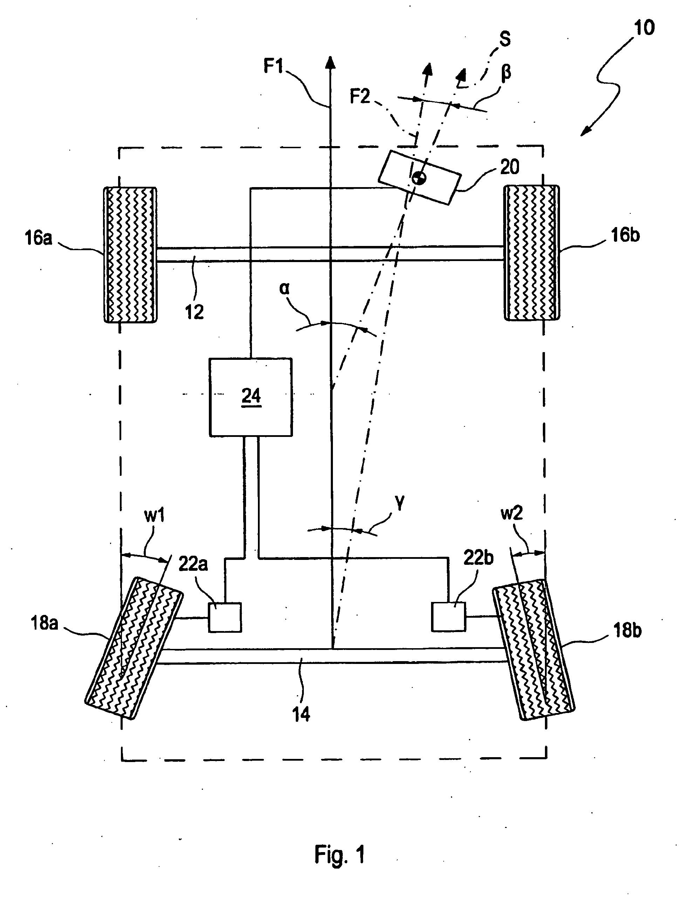

Fig. 1 zeigt einen Kraftwagen 10 mit einer Vorderachse 12 (mit linkem und rechtem Vorderrad 16a bzw. 16b) und einer Hinterachse 14 (mit linkem und rechtem Hinterrad 18a bzw. 18b), welcher einen im Frontbereich angebrachten Sensor 20 umfasst. Dieser ist mit einer Recheneinheit 24 verbunden. Die Recheneinheit 24 sowie der Sensor 20 sind im Ausführungsbeispiel Teil einer Fahrerassistenzeinrichtung.

In einem Ausgangszustand verlaufen die Einzelspuren der Hinterräder 18a und 18b im Wesentlichen parallel zur Längserstreckung des Kraftwagens 10. Dann sind die Spurwinkel w1 und w2 der Hinterräder 18a bzw. 18b beide gleich Null. In einer ersten Lage verläuft die geometrische Fahrachse F1 in der Fahrzeuglängsmittelebene im Wesentlichen parallel zu den Einzelspuren der Vorder- (16a und 16b) und Hinterräder (18a und 18b).

In einer Kfz-Werkstatt erfolgt eine Änderung der Spurwerte der Hinterräder 18a und 18b, so dass deren Spurwinkel w1 bzw. w2 einen von Null verschiedenen Wert einnehmen. Hierdurch wird die geometrische Fahrachse in eine von der ersten Lage F1 verschiedene zweite Lage F2 verbracht. Die Spurwinkel w1 und w2 können mit Winkelsensoren 22a bzw. 22b gemessen werden, welche mit der Recheneinheit 24 verbunden sind.

Die Haupterfassungsrichtung S des Sensors 20 schließt mit der Fahrachse F1 den Winkel α und mit der Fahrachse F2 den Winkel β ein. Die Fahrachsen F1 und F2 schließen miteinander einen Winkel γ ein, welcher einen Fahrachsenabweichungswert darstellt. α ist ein Sensordejustagewinkel vor der Achseinstellung, β ein Sensordejustagewinkel nach der Achseinstellung. Im Ausführungsbeispiel der Fig. 1 hat die Änderung der geometrischen Fahrachse (F1 nach F2) eine Reduzierung des Dejustagewinkels (α nach β) zur Folge. Die Abweichung der Haupterfassungsrichtung S um den Winkel α von der Soll-Haupterfassungsrichtung, welche durch die Fahrachse F1 gegeben ist, kann von der Recheneinheit 24 mit Hilfe eines statistischen Verfahrens kompensiert werden. Trotz der nicht optimalen Ausrichtung des Sensors 20 ist diese Einstellung ausreichend, damit der Sensor 20 seine Funktion erfüllen kann. Der Winkel α befindet sich also innerhalb eines zulässigen Soll-Bereichs der Sensordejustage Durch Verlagerung der Fahrachse wird der Dejustagewinkel reduziert (β<α), so dass keine Nachjustage des Sensors 20 erforderlich ist.

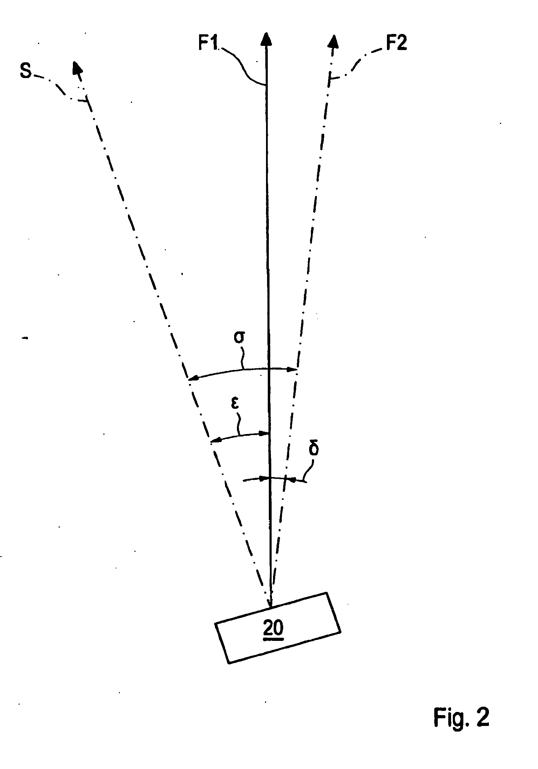

Im Ausführungsbeispiel der Fig. 2 wird der Sensordejustagewinkel beim Verbringen der geometrischen Fahrachse von F1 nach F2 nicht reduziert sondern vergrößert. δ bezeichnet den Differenzwinkel der geometrischen Fahrachsen F1 und F2. ε ist der Dejustagewinkel vor, σ der Dejustagewinkel nach der Achseinstellung. σ ist größer als ε. Es seien zwei Beispiele mit Zahlwerten diskutiert:
Beispiel 1: Der Sensordejustagewinkel vor der Achseinstellung beträgt ε = 0,5°. Der vorgegebene zulässige Toleranzbereich für die Sensordejustage beträgt -0,8° bis 0,8°. Durch die Spureinstellung der Hinterräder 18a und 18b ergibt sich eine Änderung der Fahrachse von ö = -0,1 °. Folglich beträgt der sich nun ergebende Sensordejustagewinkel σ = 0,5°-(-0,1)° = 0,6°. Dieser Wert liegt noch im vorgegebenen Toleranzbereich der Sensordejustage. Eine Justage des Sensors 20 ist somit nicht erforderlich.
Beispiel 2: Der ursprüngliche Sensordejustagewinkel liegt bereits an der Toleranzgrenze und beträgt ε = 0,75°. Der vorgegebene zulässige Toleranzbereich für die Sensordejustage beträgt wiederum -0,8° bis 0,8°. Durch die Spureinstellung der Hinterräder 18a und 18b ergibt sich eine Änderung der Fahrachse von δ = -0,1°. Folglich beträgt der sich nun ergebende Sensordejustagewinkel σ = 0,75°-(-0,1)° = 0,85°. Dieser Wert liegt nicht mehr im vorgegebenen zulässigen Toleranzbereich der Sensordejustage. Eine Justage des Sensors 20 ist somit erforderlich.

Die in der Praxis vorgenommenen Änderungen der Spurwerte der Räder 18a und 18b der Hinterachse 14 und die sich dadurch ergebenden Änderungen der Fahrachse (F1 nach F2) sind in der Regel wesentlich geringer als die zulässigen Toleranzgrenzen der Sensordejustage. Betrachtet man als realistische Abschätzung einen real vorhandenen durchschnittlichen Sensordejustagewinkel σ bzw. ε, der sich im Bereich des halben vorgegebenen Toleranzbereichs befindet, sind in den meisten Fällen einer erfolgten Fahrwerkseinstellung keine Sensorjustagen notwendig. Das beschriebene Verfahren reduziert somit die erforderliche Arbeitszeit bei der Wartung eines Kraftwagens und trägt damit auch wesentlich zu einer Kostenreduzierung bei (z. B. für den Kunden oder für den Hersteller im Gewährleistungsfall).

Für die Durchführung der Sensorjustage kommen bei der Wartung des Kraftwagens entsprechende Diagnosegeräte zum Einsatz. Diese nutzen eine Fahrzeugdiagnoseschnittstelle um Kontakt zu den Geräten 20, 22a, 22b und 24 aufzunehmen. In der Recheneinheit 24 sind z. B. entsprechende Messwerte der berechneten Sensordejustagewinkel σ bzw. ε hinterlegt und können durch das Werkstattpersonal mit Hilfe der Diagnosegeräte ausgelesen werden. Ebenso erlaubt ein Achsmesscomputer, den bestehenden Fahrachswinkel zu Beginn der Fahrwerksvermessung zu ermitteln. Nach erfolgter Achseinstellung wird der Fahrachswinkel neu berechnet, so dass die Ermittlung der Differenz des Fahrachswinkels vor und nach der jeweiligen Fahrachseinstellung auf Basis der vorliegenden Werte ohne technischen Mehraufwand vorgenommen werden kann. Durch eine Kommunikationsverbindung zwischen dem Achsmesscomputer und dem Diagnosegerät ist es möglich, diesen Differenzbetrag dem Diagnosegerät zu übermitteln. Durch den oben beschriebenen Berechnungsvorgang und einem anschließenden Vergleich mit den vorgegebenen zulässigen Toleranzwerten kann das Servicepersonal bei Bedarf angewiesen werden, die Sensorjustage durchzuführen.

## Patentansprüche

1. Verfahren zum Gewinnen von Daten betreffend die Beurteilung der Notwendigkeit einer Neuausrichtung eines Umfeldsensors (20) eines Kraftwagens (10) mit den Schritten:
a) Ermitteln eines Erfassungsrichtungsabweichungswertes (α, ε) für die Abweichung einer Haupterfassungsrichtung (S) des Umfeldsensors (20) von einer Soll-Haupterfassungsrichtung (F1) des Umfeldsensors (20) in einem Zustand des Kraftwagens (10), in dem sich die geometrische Fahrachse des Kraftwagens (10) in einer ersten Lage (F1) befindet;
b) Bestimmen der ersten Lage (F1) der geometrischen Fahrachse; **gekennzeichnet durch**
c) Verbringen der geometrischen Fahrachse des Kraftwagens (10) in eine zweite Lage (F2);
d) Bestimmen der zweiten Lage (F2) der geometrischen Fahrachse;
e) Ermitteln eines Fahrachsenabweichungswertes (γ, δ) für die Abweichung der zweiten Lage (F2) der geometrischen Fahrachse von der ersten Lage (F1) der geometrischen Fahrachse;
f) Beurteilen, ob eine Notwendigkeit zum Ändern der Ausrichtung der Haupterfassungsrichtung (S) des Umfeldsensors (20) besteht, auf Grundlage des Erfassungsrichtungsabweichungswertes (α, ε) und des Fahrachsenabweichungswertes (γ, δ); und
g) Bereitstellen von Daten betreffend die Beurteilung aus Schritt f).

2. Verfahren nach Anspruch 1,
**dadurch gekennzeichnet, dass**
in Schritt f) aus dem Erfassungsrichtungsabweichungswert (α, ε) und dem Fahrachsenabweichungswert (γ, δ) ein Ausrichtungsabweichungswert (β, σ) für die Abweichung der Haupterfassungsrichtung (S) des Umfeldsensors (20) von der zweiten Lage (F2) der geometrischen Fahrachse ermittelt wird.

3. Verfahren nach Anspruch 2,
**dadurch gekennzeichnet, dass**
der Ausrichtungsabweichungswert (β, σ) mit einem vorgebbaren Schwellwert verglichen wird und für den Fall, dass der Ausrichtungsabweichungswert (β, σ) kleiner oder gleich dem Schwellwert ist, die Beurteilung erfolgt, dass keine Notwendigkeit zum Ändern der Ausrichtung der Haupterfassungsrichtung (S) des Umfeldsensors (20) besteht und für den Fall, dass der Ausrichtungsabweichungswert (β, σ) größer als der Schwellwert ist, die Beurteilung erfolgt, dass eine Notwendigkeit zum Ändern der Ausrichtung der Haupterfassungsrichtung (S) des Umfeldsensors (20) besteht.

4. Verfahren nach einem der vorhergehenden Ansprüche,
**dadurch gekennzeichnet, dass**
für den Erfassungsrichtungsabweichungswert (α, ε) und/oder den Fahrachsenabweichungswert (γ, δ) und/oder den Ausrichtungsabweichungswert (β, σ) ein Winkelwert (α, β, γ, δ, ε, σ) ermittelt wird.

5. Verfahren nach einem der vorhergehenden Ansprüche,
**dadurch gekennzeichnet, dass**
in Schritt a) das Ermitteln des Erfassungsrichtungsabweichungswertes (α, ε) unter Zuhilfenahme von statistischen Methoden erfolgt.

6. Verfahren nach einem der vorhergehenden Ansprüche,
**dadurch gekennzeichnet, dass**
in Schritt c) das Verbringen der geometrischen Fahrachse des Kraftwagens (10) in die zweite Lage (F2) durch ein Einstellen eines Spurwinkels (w1, w2) zumindest eines Hinterrades (18a, 18b) des Kraftwagens (10) erfolgt.

7. Verfahren nach einem der vorhergehenden Ansprüche,
**dadurch gekennzeichnet, dass**
in Schritt b) und/oder in Schritt d) das Bestimmen der Lage (F1, F2) der geometrischen Fahrachse automatisch mittels einer Achsenlagemesseinrichtung (22a, 22b) erfolgt.

8. Verfahren nach einem der vorhergehenden Ansprüche,
**dadurch gekennzeichnet, dass**
das Ermitteln des Erfassungsrichtungsabweichungswertes (α, ε) in Schritt a) und/oder das Bestimmen der ersten Lage (F1) der geometrischen Fahrachse in Schritt b) und/oder das Bestimmen der zweiten Lage (F2) der geometrischen Fahrachse in Schritt d) und/oder das Ermitteln des Fahrachsenabweichungswertes (γ, δ) in Schritt e) und/oder das Beurteilen in Schritt f) und/oder das Bereitstellen von Daten in Schritt g) durch eine Recheneinheit (24), insbesondere eine Recheneinheit (24) des Kraftwagens (10), erfolgt.

9. Verfahren nach einem der vorhergehenden Ansprüche,
**dadurch gekennzeichnet, dass**
in Schritt g) die Daten so für eine Bedienperson bereitgestellt werden, dass die Bedienperson aus ihnen eine Handlungsanweisung dafür ableiten kann, ob eine Neuausrichtung des Umfeldsensors (20) erfolgen soll.

10. Verfahren nach einem der vorhergehenden Ansprüche,
**dadurch gekennzeichnet, dass**
der Umfeldsensor (20) als Radarsensor und/oder Ultraschallsensor und/oder Kamerasystem ausgebildet ist.

11. Verfahren zum Ausrichten eines Umfeldsensors (20) eines Kraftwagens (10),
**dadurch gekennzeichnet, dass**
das Verfahren zum Gewinnen von Daten gemäß Anspruch 1 ausgeführt wird und im Falle, dass in Schritt f) eine Beurteilung dahingehend erfolgt, dass eine Notwendigkeit zum Ändern der Ausrichtung der Haupterfassungsrichtung (S) des Umfeldsensors (20) besteht, die Haupterfassungsrichtung (S) des Umfeldsensors (20) in Richtung zur geometrischen Fahrachse (F2) hin ausgerichtet wird, und im Falle, dass in Schritt f) eine Beurteilung dahingehend erfolgt, dass keine Notwendigkeit zum Ändern der Ausrichtung der Haupterfassungsrichtung (S) des Umfeldsensors (20) besteht, die Ausrichtung (S) des Umfeldsensors (20) unverändert beibehalten wird.

## Claims

1. Method for generating data relating to the evaluation of the need to realign an environment sensor (20) of a motor vehicle (10), comprising the steps of:
a) determining a detecting direction deviation value (α, ε) for the deviation of a main detecting direction (S) of the environment sensor (20) from a target main detecting direction (F1) of the environment sensor (20) in a state of the vehicle (10) in which the geometric drive axis of the vehicle (10) is in a first position (F1);
b) ascertaining the first position (F1) of the geometric drive axis;
**characterised by**
c) moving the geometric drive axis of the vehicle (10) into a second position (F2);
d) ascertaining the second position (F2) of the geometric drive axis;
e) determining a drive axis deviation value (γ, δ) for the deviation of the second position (F2) of the geometric drive axis from the first position (F1) of the geometric drive axis;
f) evaluating whether there is a need to alter the alignment of the main detecting direction (S) of the environment sensor (20), on the basis of the detecting direction deviation value (α, ε) and the drive axis deviation value (γ, δ); and
g) generating data relating to the evaluation from step f).

2. Method according to claim 1, **characterised in that** in step f) an alignment deviation value (β, σ) for the deviation of the main detecting direction (S) of the environment sensor (20) from the second position (F2) of the geometric drive axis is determined from the detecting direction deviation value (α, ε) and the drive axis deviation value (γ, δ).

3. Method according to claim 2, **characterised in that** the alignment deviation value (β, σ) is compared with a pre-selectable threshold value and in the event that the alignment deviation value (β, σ) is less than or equal to the threshold value, an evaluation is made that there is no need to change the alignment of the main detecting direction (S) of the environment sensor (20), and in the event that the alignment deviation value (β, σ) is greater than the threshold value, an evaluation is made that it is necessary to change the alignment of the main detecting direction (S) of the environment sensor (20).

4. Method according to one of the preceding claims, **characterised in that**, for the detecting direction deviation value (α, ε) and/or the drive axis deviation value (γ, σ) and/or the alignment deviation value (β, σ), an angular value (α, β, γ, δ, ε, σ) is determined.

5. Method according to one of the preceding claims, **characterised in that** in step a) the determining of the detecting direction deviation value (α, ε) is carried out using statistical methods.

6. Method according to one of the preceding claims, **characterised in that** in step c) the geometric drive axis of the motor vehicle (10) is moved into the second position (F2) by adjusting a toe angle (w1, w2) of at least one rear wheel (18a, 18b) of the motor vehicle (10).

7. Method according to one of the preceding claims, **characterised in that** in step b) and/or in step d) the position (F1, F2) of the geometric drive axis is ascertained automatically by means of a device for measuring axis position (22a, 22b).

8. Method according to one of the preceding claims, **characterised in that** the determining of the detecting direction deviation value (α, ε) in step a) and/or the ascertaining of the first position (F1) of the geometric drive axis in step b) and/or the ascertaining of the second position (F2) of the geometric drive axis in step d) and/or the determining of the drive axis deviation value (γ, σ) in step e) and/or the evaluation in step f) and/or the generating of data in step g) are carried out by a computing unit (24), particularly a computing unit (24) of the vehicle (10).

9. Method according to one of the preceding claims, **characterised in that** in step g) the data are generated for an operator in such a way that the operator can derive from said data instructions as to whether realignment of the environment sensor (20) should be carried out.

10. Method according to one of the preceding claims, **characterised in that** the environment sensor (20) is embodied as a radar sensor and/or ultrasound sensor and/or camera system.

11. Method for aligning an environment sensor (20) of a motor vehicle (10), **characterised in that** the method for generating data is carried out according to claim 1 and in the event that an evaluation is made in step f) that there is a need to change the alignment of the main detecting direction (S) of the environment sensor (20), the main detecting direction (S) of the environment sensor (20) is aligned towards the geometric drive axis (F2), and in the event that an evaluation is made in step f) that there is no need to change the alignment of the main detecting direction (S) of the environment sensor (20), the alignment (S) of the environment sensor (20) is maintained unchanged.

## Revendications

1. Procédé servant à obtenir des données concernant l'évaluation de la nécessité d'une redirection d'un capteur d'environnement (20) d'un véhicule à moteur (10), comprenant les étapes suivantes consistant à :
a) calculer une valeur d'écart de la direction de détection (α, ε) pour l'écart d'une direction principale de détection (S) du capteur d'environnement (20) par rapport à une direction principale de détection théorique (F1) du capteur d'environnement (20) dans un état défini du véhicule à moteur (10), dans lequel se trouve l'essieu géométrique du véhicule à moteur (10) dans une première position (F1) ;
b) déterminer la première position (F1) de l'essieu géométrique ;
**caractérisé par** les étapes consistant à
c) amener l'essieu géométrique du véhicule à moteur (10) dans une deuxième position (F2) ;
d) déterminer la deuxième position (F2) de l'essieu géométrique ;
e) calculer une valeur d'écart d'essieu (γ, δ) pour l'écart de la deuxième position (F2) de l'essieu géométrique par rapport à la première position (F1) de l'essieu géométrique ;
f) évaluer s'il est nécessaire de modifier une orientation de la direction principale de détection (S) du capteur d'environnement (20), sur la base de la valeur d'écart de la direction de détection (α, ε) et de la valeur d'écart d'essieu (γ, δ) ; et
g) fournir des données concernant l'évaluation issue de l'étape f).

2. Procédé selon la revendication 1,
**caractérisé en ce**
**qu'**à l'étape f) on calcule, à partir de la valeur d'écart de la direction de détection (α, ε) et de la valeur d'écart d'essieu (γ, δ), une valeur d'écart de l'orientation (β, σ) pour l'écart de la direction principale de détection (S) du capteur d'environnement (20) par rapport à la deuxième position (F2) de l'essieu géométrique.

3. Procédé selon la revendication 2,
**caractérisé en ce**
**que** la valeur d'écart de l'orientation (β, σ) est comparée à une valeur seuil pouvant être prédéfinie, et en ce qu'on estime qu'il n'est pas nécessaire de modifier l'orientation de la direction principale de détection (S) du capteur d'environnement (20) si la valeur d'écart de l'orientation (β, σ) est inférieure ou égale à la valeur seuil et qu'il est nécessaire de modifier la direction de l'orientation principale de détection (S) du détecteur d'environnement (20) si la valeur d'écart de l'orientation (β, σ) est supérieure à la valeur seuil.

4. Procédé selon l'une quelconque des revendications précédentes,
**caractérisé en ce**
**qu'**on calcule une valeur d'angle (α, β, γ, δ, ε, σ) pour la valeur d'écart de l'orientation de détection (α, ε) et/ou pour la valeur d'écart d'essieu et/ou pour la valeur d'écart de l'orientation (β, σ).

5. Procédé selon l'une quelconque des revendications précédentes,
**caractérisé en ce**
**qu'**à l'étape a) on calcule la valeur d'écart de la direction de détection (α, ε) à l'aide de méthodes statistiques.

6. Procédé selon l'une quelconque des revendications précédentes,
**caractérisé en ce**
**qu'**à l'étape c), l'essieu géométrique du véhicule à moteur (10) est amené dans la deuxième position (F2) par un ajustement d'un angle de pincement (w1, w2) d'au moins une roue arrière (18a, 18b) du véhicule à moteur (10).

7. Procédé selon l'une quelconque des revendications précédentes,
**caractérisé en ce**
**qu'**à l'étape b) et/ou à l'étape d), on détermine la position (F1, F2) de l'essieu géométrique automatiquement au moyen d'un dispositif de mesure de position d'essieu (22a, 22b).

8. Procédé selon l'une quelconque des revendications précédentes,
**caractérisé en ce**
**qu'**on calcule la valeur d'écart de la direction de détection (α, ε) à l'étape a), et/ou en ce qu'on détermine la première position (F1) de l'essieu géométrique à l'étape b), et/ou en ce qu'on détermine la deuxième position (F2) de l'essieu géométrique à l'étape d), et/ou en ce qu'on calcule la valeur d'écart d'essieu (γ, δ) à l'étape e), et/ou en ce qu'on évalue à l'étape f) et/ou on fournit des données à l'étape g) en utilisant une unité de calcul (24), en particulier une unité de calcul (24) du véhicule à moteur (10).

9. Procédé selon l'une quelconque des revendications précédentes,
**caractérisé en ce**
**qu'**on fournit à l'étape g) les données à un opérateur de sorte que l'opérateur est en mesure d'en déduire une instruction de manoeuvre afin de définir s'il est recommandé d'orienter à nouveau le capteur d'environnement (20).

10. Procédé selon l'une quelconque des revendications précédentes,
**caractérisé en ce**
**que** le capteur d'environnement (20) est réalisé sous la forme d'un capteur radar et/ou d'un capteur à ultrasons et/ou d'un système de caméra.

11. Procédé servant à orienter un capteur d'environnement (20) d'un véhicule à moteur (10),
**caractérisé en ce**
**que** le procédé est exécuté pour obtenir des données selon la revendication 1, et en ce que la direction principale de détection (S) du capteur d'environnement (20) est orientée en direction de l'essieu géométrique (F2) si on évalue à l'étape f) qu'il est nécessaire de modifier l'orientation de la direction principale (S) du capteur d'environnement (20) et que la direction (S) du capteur d'environnement (20) reste inchangée si on évalue à l'étape f) qu'il n'est pas nécessaire de modifier l'orientation de la direction principale de détection (S) du capteur d'environnement (20).
